(19) Europäisches Patentamt
European Patent Office
Office européen des brevets

(11) Publication number: 0 198 132
A1

(12) **EUROPEAN PATENT APPLICATION**

(21) Application number: 85302589.8

(22) Date of filing: 12.04.85

(51) Int. Cl.[4]: A 01 N 43/40, B 27 K 3/34

(43) Date of publication of application: 22.10.86
Bulletin 86/43

(84) Designated Contracting States: AT BE CH DE FR GB IT LI LU NL SE

(71) Applicant: THE DOW CHEMICAL COMPANY, 2030 Dow Center Abbott Road P.O. Box 1967, Midland, MI 48640 (US)

(72) Inventor: Rose, Kenneth R., 205 Hollybrook Drive, Midland Michigan 48640 (US)

(74) Representative: Allard, Susan Joyce et al, BOULT, WADE & TENNANT 27 Furnival street, London EC4A 1PQ (GB)

(54) **Method for controlling termites.**

(57) Termites control is achieved by treating wood or wood products with an effective amounts of a quarternary ammonium salt of a pyridinol compound.

EP 0 198 132 A1

# METHOD FOR CONTROLLING TERMITES

Termites are obnoxious pests well known for their insatiable appetite for materials such as wood and wood products. Because of their craving for such materials, termites are directly responsible for the destruction of man-made wooden structures such as, for example, buildings, foundations, fence posts, etc. To control the termites, the soil and/or the building materials have been treated with materials such as pentachlorophenol, aldrin, chlordane, dieldrin, heptachlor, some arsenic compounds and creosote. However, these substances are highly toxic and are notorious environmental pollutants, and there is a need for less toxic and environmentally less damaging chemical substitutes. Thus, it is quite evident that there is a need for a means for reducing and/or preventing the attack on such materials by termites which provides long lasting control while at the same time possessing low acute toxicity towards mammals.

The present invention is directed to a method for preventing and/or reducing the attack of termites on wood and wood products by contacting said material

with an effective amount of a quaternary ammonium salt of a halo substituted 2- and/or 4-pyridinol compound.

Briefly, in accordance with the present invention, termites are controlled by contacting cellulosic material with an effective amount of one or more active compounds corresponding to the formula:

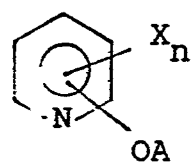

wherein

-OA is in the 2- or 4- position;

A represents a quaternary ammonium group;

each X independently represents a chlorine, fluorine, bromine or iodine atom; and

n is 0, 1, 2, 3 or 4.

Optionally, one or two lower alkyl, e.g. methyl, ethyl, propyl or butyl groups, may be present on the pyridine nucleus.

More particularly, A may be a quaternary ammonium group having the formula

$$^{\oplus}NY$$

where Y represents hydrogen or a substituted or unsubstituted alkyl radical having from 1 to 8 carbon atoms wherein the substituents may be halogen or 1 or 2 hydroxyl groups.

By the term "lower alkyl" as used herein is meant straight or branched chain alkyl groups containing from 1 to 6 carbon atoms.

For convenience, the compounds will be hereinafter referred to as "active compounds". The active compounds are applied to the wood and wood products including paper and paper products, which is a food source for the termites, in amounts effective to reduce and/or prevent attack of said material by the termites.

Of particular interest in the practice of the present invention is a method of controlling termites employing as the active compound the quaternary ammonium salt of 3,5,6-trichloro-2-pyridinol by application to materials such as wood, wood products, paper and paper products. Application of the active compound to the said material can be accomplished by dipping, spraying or painting the material with a composition containing the active compound.

The term "controlling termites" or any variation thereof, is employed to describe the activity of the active compounds of Formula I in reducing and/or preventing the attack of termites on the treated material.

The specific mechanism by which the active compounds reduce and/or prevent the termites from attacking the materials such as wood, wood products, paper and paper products is not known. It appears, however, that the active compounds in some way make these materials unpalatable to the termites.

The active compounds of the present invention, useful for controlling termites, can be applied in unmodified form but they are conveniently applied in the form of a liquid or finely-divided solid composition

containing inert adjuvants or carriers to aid in dispersing the active compounds to treat the materials whereby eventual contact with the termite will be established so that termite control is achieved. In addition, wood rot also is reduced and/or prevented by the present treatment. Suitable carriers include water, alcohols, glycols, kerosene, other petroleum distillates and aromatic solvents or convenient combinations of any of these or other suitable carrier systems or solvents. The active compounds can also be dispersed in a finely-divided solid and employed as dusts for application to the cellulosic material. The active compounds can also be absorbed into solid carrier clays and employed as granules for application to the material. These solid compositions can also be dispersed in water optionally with the aid of a surfactant and the resulting aqueous suspensions can be applied to the material as a drench or spray.

The above emulsifiable concentrates are prepared employing standard well-known formulations techniques. For example, the active compounds are mixed with a petroleum distillate, such as xylene; an organic solvent, such as dimethylformamide (DMF); and an emulsifying agent (surfactant) to form an emulsifiable concentrate, which upon dilution with water forms a suitable aqueous emulsion for application to wood or wood products.

The active compounds are preferably applied to the materials which may be subject to attack by termites. The most common applications will be to wood, wood products, paper and paper products. The preferred material is wood. When wood is treated, the

active compounds are usually applied to said material as an oil formulation containing organic solvents as the carrier. Suitable organic solvents include kerosene, xylene, toluene and other petroleum distillates. Other organic solvents such as DMF can be added to the oil formulations. A preferred oil formulation would include, for example, 1 to 2 parts by weight active compound, 95 to 97 parts by weight kerosene and 2 to 3 parts by weight DMF.

In such applications to wood, the active compounds, in an oil formulation, can be applied by brushing, dipping, spraying, or the like according to known procedures. Usually, the concentration of active compound in the oil formulation is from 0.00001 to 10.0 percent by weight and preferably from 0.1 to 2.0 percent by weight. The oil formulation is applied to the wood in quantities sufficient to thoroughly wet its surface. Alternatively, the active compounds can be applied to wood in a pressure treatment whereby the active compound penetrates deeply into the wood.

In one embodiment of the present invention, 3,5,6-trichloro-2-pyridinol or an acceptable salt thereof is brushed onto wood in an oil formulation for controlling termites. In this embodiment, damage by termites to the treated wood is prevented.

The exact amount of active compound to be employed when treating the above materials is not critical as long as an amount effective to control termites is retained by the material being treated. The actual amount of the active compound retained by materials such as wood will depend upon a variety of

factors such as, for example, type of wood, surface area, moisture content of the wood, density and method of treatment. The optimum amount for an individual application can be readily determined by one skilled in the art employing standard rate titration experiments.

The following examples illustrate the practice of the present invention but should not be construed as limiting its scope.

Example 1

Preparation of 2-Pyridinol:3,5,6-trichloroammonium Salt

59.5 grams (0.3 mol) of recrystallized 3,5,6--trichloro-2-pyridinol was suspended in 200 ml of water and an excess of ammonium hydroxide (100 grams) was added. The suspension was warmed to 50-60°C, filtered and the filtrate cooled in an ice bath. Crystals formed which were removed by filtration and air dried. M.P. 208-209°C with decomposition. Obtained 53.6 grams.

Example 2

Preparation of Trimethyloctadecylammonium-3,5,6-trichloro-2-pyridinolate

The sodium salt, 22 grams (0.1 mol) of 3,5,6-trichloro-2-pyridinol was dissolved in hot isopropyl alcohol and 69 grams of trimethyloctadecylammonium chloride was added. The mixture was heated on a steam bath and slurried. A fine white precipitate of sodium chloride formed and was removed by filtration. The filtrate was concentrated on the steam bath to a thick syrup which was dissolved in methylene chloride and filtered. The filtrate was evaporated on the steam

bath and then on a rotating evaporator of 10 mm Hg absolute and 95°C, bath temperature. The product (49 grams) was a white paste.

Example 3

Preparation of the Diethanolamine Salt of 3,5,6-trichloro-2-pyridinol

A solution of 3,5,6-trichloro-2-pyridinol (50 grams - 0.025 mol) in 50 ml of diethyl ether was added to a mixture of diethanolamine (2.65 grams - 0.025 mol) in 50 ml of diethyl ether. A solid separated rapidly. The mixture was stirred for an hour, filtered and the solid product dried under vacuum. Yield 6.9 grams of white powder melting at 107-109°C.

| Analysis: | C | H | N |
|---|---|---|---|
| Calculated: | 35.60 | 4.32 | 9.23 |
| Found: | 35.74 | 4.66 | 9.65 |

Infrared and NMR analysis support the desired structure.

Example 4

Preparation of the n-butylamine salt of 3,5,6-trichloro--2-pyridinol

5.5 grams (0.075 mol) of n-butylamine was added to a solution of 15.0 grams (0.075 mol) of 3,5,6-trichloro-2-pyridinol dissolved in 100 ml of diethyl ether. The mixture exothermed and solidified. After about 15 minutes the product was filtered and the solid material dried. Yield 18.1 grams of white powder melting at 172°-173°C.

| Analysis: | C | H | N |
|---|---|---|---|
| Calculated: | 39.80 | 4.83 | 10.32 |
| Found: | 39.87 | 4.85 | 10.45 |

The proposed structure was supported by Infrared and NMR analysis.

Following the above general procedures and employing the appropriate starting materials, other quaternary ammonium salts are prepared.

The invention is further illustrated by the following Example.

Example 5

Weighed cubes of Southern Yellow Pine (1.9 x 1.9 x 1.9 cm) were held submerged in a treating solution consisting of a 50/50 v/v mixture of ethyl alcohol and water and the indicated active ingredient in amount sufficient to provide the indicated percent active in a beaker, and the pressure in the beaker was reduced to 50 mm Hg for 20 minutes, after which the vacuum was released. The cubes of wood were maintained in the submerged solution for 1/2 hour, then removed from the solution, excess solution removed by wiping with an absorbent material, the cubes weighed before drying, and the retained active ingredient was calculated in parts per million. The cubes were then allowed to dry to constant weight. The dried cubes were weighed and placed individually in jars on a sand base and about 100 subterranean termites were placed in each jar. After four weeks, the cubes were removed from the jars and weighed. The loss in weight was attributed to termite damage.

The compounds tested, the treatment rates and retentions (average of two cubes), and the weight losses were as follows:

TABLE I

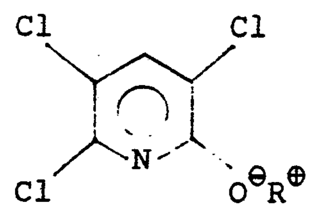

| $R^{\oplus}$ | % Active Ingredient In Treating Solution | Active Ingredient Retention (ppm) | Percent Weight Loss |
|---|---|---|---|
| $\overset{\oplus}{N}-(CH_3)_3$<br>$C_{18}H_{37}$ | 0.250 | 3433 | 0-5 |
| $\overset{\oplus}{N}-(CH_3)_3$<br>$C_8H_{17}$ | 0.250 | 3350 | 0-5 |
| $\overset{\oplus}{N}H_3$<br>$C_4H_9$ | 0.250 | 3685 | 0-5 |
| $\overset{\oplus}{N}H_2$<br>$(C_2H_4OH)_2$ | 0.250 | 3385 | 0-5 |
| Untreated Control | 0 | 0 | 20-80 |
| Solvent Treated Control | 0 | 0 | 20-80 |

CLAIMS:

1. A method of reducing and/or preventing the attack on cellulosic materials products by termites which comprises contacting the cellulosic material with a composition containing an effective amount of one or more active compounds of the formula:

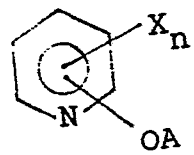

wherein

-OA is in the 2- or 4- position;

A represents a quaternary ammonium group;

each X independently represents a chlorine, fluorine, bromine or iodine atom; and

n is 0, 1, 2, 3, or 4;

2. A method as claimed in Claim 1 wherein the active compound is quaternary ammonium salt of 3,5,6-tri-chloro-2-pyridinol; the diethanolamine salt of 3,5,6-tri-chloro-2-pyridinol; or the n-butylamine salt of 3,5,6-trichloro-2-pyridinol.

3. A method as claimed in Claim 1 or Claim 2 wherein the active compound is applied to the cellulosic material by dipping, spraying or painting the wood.

4. A method as claimed in any one of the preceding Claims wherein the termite controlling composition contains the active compound in an amount of from 0.00001 to 10 percent by weight.

5. A method as claimed in Claim 4 wherein the termite controlling composition contains the active compound in an amount of from 0.1 to 2.0 percent by weight.

6. A method as claimed in any one of Claims 1 to 5 wherein the cellulosic material is wood, a wood product, paper or a paper product.

7. A method as claimed in any one of the preceding Claims wherein the active compound is applied in the form of a liquid or finely-divided solid composition containing one or more inert adjuvants or carriers.

8. A method as claimed in Claim 7 wherein the active compound is applied in the form of an oil comprising 1 to 2 parts by weight of the active compound, 95 to 97 parts by weight of kerosene and 2 to 3 parts by weight of dimethylformamide.

9. Wood which has been treated with a termite controlling composition containing an effective amount of one or more active compounds as defined in Claim 1 or Claim 2.

10, Wood as claimed in Claim 9 wherein the active compound has been applied thereto by dipping, spraying or painting the wood.

11. Wood as claimed in Claim 9 or Claim 10 wherein the termite controlling composition contains the active compound in an amount of from 0,00001 to 10 percent by weight.

12. Wood as claimed in Claim 11 wherein the termite controlling composition contains the active compound in an amount of from 0.1 to 2.0 percent by weight.

European Patent Office

# EUROPEAN SEARCH REPORT

0198132

Application number

EP 85 30 2589

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 252 858 (L.D. GOODHUE)<br>--- | | A 01 N 43/40<br>B 27 K 3/34 |
| A | US-H- 425 572 (P.B. DOMENICO)<br>--- | | |
| A | US-A-3 355 278 (E.D. WEIL et al.)<br>--- | | |
| A | GB-A-1 031 083 (DOW CHEMICAL)<br>----- | | |
| | | | TECHNICAL FIELDS SEARCHED (Int. Cl.4) |
| | | | A 01 N<br>B 27 K |

The present search report has been drawn up for all claims

| Place of search | Date of completion of the search | Examiner |
|---|---|---|
| THE HAGUE | 19-12-1985 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82